Europäisches Patentamt

European Patent Office

Office européen des brevets

(19)

(11) Publication number: **0 422 057 B1**

(12) **EUROPEAN PATENT SPECIFICATION**

(45) Date of publication of patent specification: **01.06.94** (51) Int. Cl.5: **G21B 1/00, H05H 1/02**

(21) Application number: **89907156.7**

(22) Date of filing: **26.06.89**

(86) International application number:
**PCT/EP89/00715**

(87) International publication number:
**WO 90/00301 (11.01.90 90/02)**

(54) **COLD FUSION PROCESS IN DENSE BOSON PLASMA.**

(30) Priority: **27.06.88 GB 8815203**

(43) Date of publication of application:
**17.04.91 Bulletin 91/16**

(45) Publication of the grant of the patent:
**01.06.94 Bulletin 94/22**

(84) Designated Contracting States:
**AT BE CH DE FR GB IT LI LU NL SE**

(56) References cited:
**US-A- 2 728 877**
**US-A- 3 258 402**

**Instruments and Experimental Techniques, vol.24, no. 2, Part2, March-April 1981, Plenum Publishing Corporation (New York,US) A.A. Luchanivov et al.:"A generator of toroidal plasma vortices", pages 541-542 see the whole article**

**Radio-Electronics, vol. 47, no. 6,June 1976, Gernsback publications,Inc. (New York, US)**

(73) Proprietor: **Dijkhuis, Geert C.**
**Kortenaerlaan 7**
**NL-4535 BV Terneuzen(NL)**

Proprietor: **Wevers, Kornelis Willem**
**Parkstraat 35**
**NL-3581 PD Utrecht(NL)**

(72) Inventor: **Dijkhuis, Geert C.**
**Kortenaerlaan 7**
**NL-4535 BV Terneuzen(NL)**
Inventor: **Wevers, Kornelis Willem**
**Parkstraat 35**
**NL-3581 PD Utrecht(NL)**

(74) Representative: **Strasse, Maiwald, Meys, Stach & Vonnemann**
**Postfach 90 09 54**
**D-81509 München (DE)**

## Description

This invention relates to a method and device for generating a continuous fusion process in a superconducting plasma .

Although a world-wide effort to harness fusion energy has been underway for several decades, its promise as an unlimited source of cheap and clean energy remains unfulfilled.

One early approach towards controlled fusion used vacuum tube technology to produce interactions between nuclei inside a space charge device with spherical or cylindrical electrodes.

A representative patent US 3 258 402 (1966) by P.T. Farnsworth discloses a spherical triode with a perforated anode surrounded by a con- centric grid and a metallic cathode. With suitable potentials applied to each electrode, converging electron orbits pass through the anode to form a cloud of negative space charge near the center accelerating ions to nuclear reaction velocities. At accessible operational conditions such space charge devices have turned out to suffer from prohibitive dissipation of input energy into heat , and their development has been abandoned.

Other early attempts centered on locking up thermalized plasma inside a magnetic bottle and heating it to thermonuclear conditions. As mirror machines and tokamaks these magnetic confinement schemes evolved into installations of such enormous size and complexity that only the richest and technologically most advanced nations can afford them. Representative methods and apparatus are disclosed in US Patent 3 016 342 (1962) by M. Kruskal et al. and US Patent 3 170 841 (1965) by R.F. Post. Operation of current magnetic confinement schemes requires a system of powerfull high-vacuum pumps, near-complete suppression of plasma impurities, a complex of strong confinement magnets, high-power electromagnetic pulses for Ohmic plasma heating , and for additional heating intense particle beams and microwaves. A magnetic confinement scheme with net energy production is not foreseen in this century, much less a tokamak or mirror machine producing electricity at competitive prices.

A third road to controlled fusion opened up with laser and particle beams directed at solid targets. Fast particles or photons hitting a cryogenic fuel pellet vaporize its outer layers so rapidly that their pressure drives the core region into thermonuclear conditions. The momentum of the ingoing compression wave is not reversed until after the pellet has burned most of its thermonuclear fuel. Such inertial confinement schemes allow explosive release of fusion energy in quantities that can be handled by a reaction chamber of moderate size. Poor energy conversion efficiency in beams and in beam-target coupling keeps energy break-even beyond the reach of the largest laser and particle beam facilities built so far. The level of technology and cost restricts inertial confinement research to a still more selective group of nations than magnetic confinement already does.

While the mainstream of fusion research absorbed most money and manpower, more modest alternatives were proposed and pioneered by some individual scientists and small groups. Four of these alternative systems were inspired by models for ball lightning, an atmospheric phenomenon which still lacked a satisfactory scientific explanation.

As early as 1956 P.L. Kapitza In Moscow explained ball lightning as an electric discharge sustained by absorption of resonant radio waves generated by thunderstorm activity. Kapitza tested his hypothesis with discharges struck In a gas-filled microwave cavity in resonance with a powerfull r.f. generator in his laboratory. He observed a filamentary discharge structure, and in his Nobel Prize Acceptance Lecture reported local electron temperatures above the threshold for fusion. Micro-instabilities in the discharge plasma prevented Kapitza from raising ion temperature above the fusion threshold.

In the United Stated P.M. Koloc explained ball lightning as a plasma vortex ring isolated from neutral atmospheric gas by a current sheet maintained by magnetic fields from ring currents in the central plasma vortex. In US Patent 4 023 065 (1977) Koloc discloses high-voltage discharge through a helical pre-ionized channel as method for generation of his compound plasma configuration. Fusion reactions do not take place until the central plasma ring is disrupted by very large mechanical or pneumatic pressures applied from the outside. Without entering on the details of the proposed mechanism Koloc states that his plasma configuration can also sustain itself by a continuous fusion process.

A design for continuous fusion in a small laser-induced plasma sphere is disclosed in US Patent 4 448 743 (1984) by R.W. Bass. Confi- nement comes from moderate external gas pressure. An electric double layer formed spontaneously around the fusion plasma ensures thermal insulation from adjacent cold gas layers as in Kapitza's microwave discharges. Rejecting Kapitza's conclusion of insufficient thermalization between ions and electrons, Bass discloses a combination of beams or tunable lasers to reach plasma temperatures an order of magnitude higher than in Kapitza's experiments. Ex- tensive calculations of gas, plasma and beam parameters are given to substantiate claims that this fusion reactor concept can be built in a straightforward manner with commercially available lasers and microwave generators.

Superconductivity of turbulent plasma in ball lightning and circuit breaker fireballs was disclosed in Australian Patent 533 989 (1979), Canadian Patent 1 185 020 (1985), and European Patent 0 019 668 (1985), by G.C.Dijkhuis as basis for a small-scale fusion reactor concept with continuous operation. Featuring magnetic interaction and convective energy transfer by plasma vortices, the model couples energy flux, vorticity, magnetic field and current density in a self-confined plasma sphere with thermonuclear potential. Its relativistic upper limit on energy storage covers the full range of ball lightning and fireball observations. Its scaling law for fusion power shows that high-energy ball lightning can support itself on energy produced by fusion reactions between atmospheric deuterium nuclei. A rotational degree of freedom maintains local deviations of charge neutrality inside the plasma as in a hydromagnetic capacitor. From an estimate for the dielectric constant of fireball plasma, values for discharge current in the ignition circuit, its inductance and resistance necessary for fireball generation are disclosed. Shape, size, motion and material are specified for the electrodes of a fireball- forming circuit breaker. A reaction chamber for stable suspension, refueling and removal of reaction products is presented for a self-confined and self-supported thermonuclear fireball. A throttle valve mixing thermonuclear fuel with inert carrier gas regulates the level of fusion power output.

The cited disclosures by G.C. Dijkhuis formulate conditions neccessary for fireball generation only for circuit breakers with electrodes that are pressed together during short-circuit but move apart during interruption of the discharge current. A complete submarine propulsion battery can just provide the prescribed amount of circuit inductance and discharge current. When fully charged, the battery stores ten thousand times more electric energy than the fireball can absorb from it, making the energy conversion process unefficient and even dangerous in case contact separation fails to take place during a short-circuit experiment. J.R. Rafelski and S.E Jones envision a commercial fusion reactor with electron-like particles called muons replacing powerful lasers or high-temperature plasmas.

The present invention discloses alternative ways to generate and maintain a dense boson plasma structure releasing controlled amounts of fusion energy. Therefore the invention provides a method according to claim 1 and a device according to claim 10. A high voltage discharge is struck in a cold gas mixture flowing between fixed electrodes in a contoured nozzle. The electric field at breakdown must exceed a threshold value in order to form a cold and dense discharge plasma with electron pairs partially condensed into the ground state for particles obeying Bose-Einstein statistics. The discharge must strike a gas flow with sufficient vorticity in order to transfer charge from the high-voltage supply to a network of microscopic vortex filaments forming a spherical plasma vortex. The initial gas mixture must contain sufficient thermonuclear fuel mixed with inert carrier gas to initiate fusion reactions in ion layers circulating at high speed around self-trapped electrons in the core of the vortex filaments. The discharge must be immersed in an ambient gas flow maintaining its position and internal circulation in a reaction chamber, continuously removing its reactions products , and supplying it with fresh fuel.

More details, features and advantages will be apparant from the following description considered in conjunction with the drawings, in which

Figure 1 is a thermodynamic phase diagram showing successive states of free electron gas in a high-voltage discharge between fixed electrodes leading to creation of a boson dense boson plasma, relative to alternative method using intense currents between moving circuit breaker contacts.

Figure 2 shows microscopic structure of ground state in dense boson plasma (a) without internal rotation as a fractal network, (b) with internal rotation as an array of vortex filaments.

Figure 3 shows effect of initial neutral gas conditions on electric field treshold for creation of dense boson plasma between fixed electrodes, relative to dependency of the breakdown field on concentration of neutral atoms and on electrode geometry.

Figure 4 shows the kinetic energy of atmospheric nuclei in collisionless circulation around a collapsed core of bosonised electrons relative to the Bohr radius and typical ionization and fusion energies.

Figure 5 shows the Gamow penetration factor for proton capture by nuclei inside a boson vortex, with radial distances referred to the Bohr radius and the Compton wavelength.

Figure 6 is a cross section of the discharge region showing the construction of the electrode system and flow duct in the plane defined by the direction of electric current and gas flow.

Figure 7 is a cross section of the discharge region in the plane of current flow, but perpendicular to the direction of gas flow.

Figure 8 shows streamlines and equipotential lines between electrodes, housing, and duct in the plane of Figure 6 , prior to electric breakdown.

Figure 9 is a side view of the test facility with a pipeline connecting units for gas conditioning with the discharge nozzle.

Figure 10 is a state diagram for nitrogen showing gas conditions in the flow channel from gas reservoir to exhaust in free air.

Figure 11 is a front view of the test facility connected with high-voltage power supplies and additional circuit components.

Figure 12 shows calculated time dependences of the gap voltage prior to breakdown in the equivalent electrical circuit of Fig. 11.

We review and extend some basic concepts in our boson model for ball lightning that determine (i) thermodynamic state, composition and flow pattern of neutral gas prior to breakdown, and (ii) size and shape of the electrode configuration necessary for creating and maintaining a boson vortex plasma with a continuous fusion process. Pressure p, number density n and absolute temperature T of neutral gases near STP generally obey the ideal gas law:

$$p = n^*k_B{}^*T \qquad (1)$$

With S.I. units pascal (Pa) for pressure, $m^{-3}$ for number density, and kelvin (K) for temperature, Boltzmann's universal constant in Equation (1) is $k_B = 1.38^*10^{-23}$ J/K. For gas mixtures such as air total pressure follows from Equation (1) by adding the pressure of each separate component. Table 1 specifies relevant pressures and number densities at temperature T = 288 K (15 °C) for the US Standard Atmosphere at sea level, taken from the Handbook of Chemistry and Physics, 67th Edition, p. F-141 . In humid air at 288 K the pressure of water vapour can rise to 1.71 kPa. The natural abundance of deuterium forms about 1 DHO molecule in every 3000 normal $H_2O$ water molecules. Table 1 shows that humid air at 15° C contains thermonuclear fuel in higher concentrations than leading magnetic confinement schemes for controlled fusion.

| component | symbol | p, kPa | n, $m^{-3}$ |
|---|---|---|---|
| all | - | 101 | $2.55^*10^{25}$ |
| water | $H_2O$ | 1.71 | $4.3^*10^{23}$ |
| deuterium | D | | $1.4^*10^{20}$ |

Table 1. Pressure and particle density in air saturated with water vapour at sea level and temperature 15 °C.

Ordinary lightning discharges produce fast neutrons indicating fusion reactions between atmospheric deuterium nuclei. Our boson model explains long lifetime and high energy of some ball lightning as result of a steady - state fusion process burning atmospheric deuterium. Our invention discloses how to scale this natural fusion process up to usefull energy production.

The ideal gas model has non-interacting, zero-volume molecules ruling out phase transitions to a liquid or solid state known for all real gases. Amending the ideal gas law with terms for molecular volume and mutual attraction Van der Waals obtained a state equation suitable for condensation of real gases to the liquid state. The vanderwaals equation introduces a critical point in the phase diagram of a real gas marking the highest possible temperature and pressure of the two-phase equilibrium between gas and liquid. Relative to pressure $p_{cr}$, temperature $T_{cr}$ and number density $n_{cr} = 8^*p_{cr}/(3^*k_B{}^*T_{cr})$ of this critical phase point , the vanderwaals equation takes the universal form:

$$\frac{p}{p_{cr}} = \frac{8^*T/T_{cr}}{3^*n_{cr}/n - 1} - \frac{3^*n^2}{n_{cr}^2} \qquad (2)$$

4

as given by Kerson Huang, Statistische Mechanik I, p. 55 . Critical pressure, temperature and number density in Equation (2) are different for each gas. For humid air components nitrogen as inert carrier gas , and hydrogen and deuterium as fuel, relevant experimental data in Table 2 are taken from the CRC Handbook p. F 62.

| gas | symbol | $P_{cr}$, MPa | $T_{cr}$, K | $n_{cr}$, $m^{-3}$ |
|---|---|---|---|---|
| nitrogen | $N_2$ | 3.34 | 126.2 | $5.2*10^{27}$ |
| water | $H_2O$ | 22.1 | 647 | $6.6*10^{27}$ |
| deuterium | $D_2$ | 1.65 | 38.2 | $8.3*10^{27}$ |

Table 2. Temperature, pressure and number density at critical point of two-phase equilibrium between gas and liquid.

The critical temperatures in Table 2 explain why atmospheric conditions can liquefy water vapour, but not nitrogen or deuterium gas. Our apparatus extends the range of atmospheric gas conditions to include condensation of nitrogen, but not of deuterium.

In lightning or similar arc discharges classical coulomb forces between free electrons and ions produce a net attractive effect diminishing total pressure below corresponding ideal gas values. Quantum theory derives an attractive exchange interaction from coulomb forces between free electrons in a metal lattice. This exchange interaction makes a gas of fully degenerate electrons with mass $m \approx 9.11*10^{-31}$ kg and charge $e \approx 1.6*10^{-19}$ C unstable below a critical electron density

$$n_{cr} = m^3 e^6 / 3\pi^2 \varepsilon_o^3 h^6 \approx 7.35*10^{27} \; m^{-3} \; ,$$

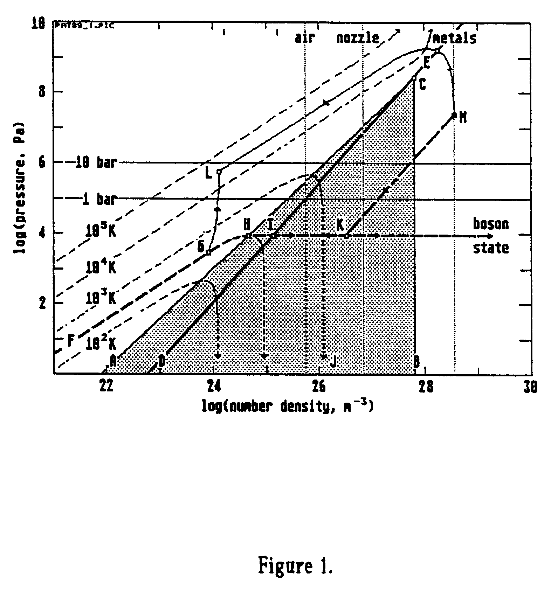

where $h \approx 6.63*10^{-34}$ J*s is Planck's constant, and $\epsilon_o \approx 8.85*10^{-12}$ F/m is the vacuum permittivity. See A.L. Fetter and J.D. Walecka, Quantum Theory of Many-Particle Systems, p. 32. Figure 1 shows this critical density at line BC lying a factor ten below electron densities in metals indicated at point M. Interruption of intense currents with a circuit breaker usually heats metal plasma vaporizing from electric contacts to arc conditions at point L. Isenthalpic curve MEL represents this dissipative proces in Fig. 1. Previous patents by G.C. Dijkhuis arrive at thermonuclear conditions in a circuit breaker firebal by the steps: (i) adiabatic expansion of discharge plasma along line M K into unstable region ABC, (ii) decomposition of unstable discharge plasma into a filamentary vortex structure along isobaric and isothermal line HK , and (iii) collaps of electron pairs into a superconducting ground state with quantized vortex filaments to the right of line DE. Here we arrive at fusion conditions in ball lightning by an alternative path, replacing step (i), but leaving steps (ii) and (iii) unchanged.

The return stroke of ordinary lightning rapidly ionizes cold neutral gas from vanishing electron pressure at point F Into hot lightning plasma dominated by electron pressure at point L in Figure 1. If electric breakdown can push ionization beyond point H into unstable region ABC steps (ii) and (iii) for the circuit breaker fireball will now form a ball lightning in mid-air as occasionally reported. For electron gas with zero bulk compressibility $-V(\partial p/\partial V) = 0$ on border line AC, quantum theory connects electron density n and temperature T through

$$T = h*e*n^{1/2}/(120*\pi^2*\varepsilon_o*m*k_B^2)^{1/2} \approx 7.9*10^{-11}*n^{1/2}.$$

See Fetter and Walecka, p. 280. Therefore unstable isotherms of a real gas of free electrons follow an alternative to the vanderwaals equation for real gases of neutral atoms, known as Berthelot's equation. See H.B. Callen, Thermodynamics, p. 341. Relative to pressure, temperature and number denstity of a critical

EP 0 422 057 B1

point such as C in Figure 1, the Berthelot equation has a universal form:

$$\frac{p}{P_{cr}} = \frac{8*T/T_{cr}}{3*n_{cr}/n - 1} - \frac{3*n^2*T_{cr}}{n_{cr}^2 * T} \qquad (3)$$

This gives infinite pressure at the same number density $n = 3*n_{cr}$ as the vanderwaals equation (2), indicating virtual incompressibility of the condensed phase. With a negative correction term increasing for lower temperatures , Equation (3) has a wider unstable region than the vanderwaals equation would have with the same critical parameters. Curve FHJ In Figure 1 is the low-density part of a typical Berthelot isotherm obtained with Equation (3). The corresponding high-density part yields negative pressures prohibited in a logaritmic diagram. Table 3 compares critical parameters calculated for a real gas of free electrons in ball lightning plasma with experimental data for a comparable two-phase plasma system occurring when the metal palladium has absorbed a large amount of hydrogen or deuterium. Absorption of sufficient hydrogen changes palladium into a superconductor with transition temperature around 10 K, and slightly higher for the palladium-deuterium system.

| gas | symbol | $P_{cr}$, MPa | $T_{cr}$, K | $n_{cr}$, m |
|---|---|---|---|---|
| electrons in ball lightning | e | 270 | 7110 | $7.35 *10^{27}$ |
| hydrogen in palladium | Pd-H | 2.01 | 567 | $0.69 *10^{27}$ |
| deuterium in palladium | Pd-D | 3.45 | 550 | $1.12 *10^{27}$ |

**Table 3. Critical parameters for free electrons in ball lightning plasma relative to hydrogen or deuterium absorbed in palladium**

For a two-phase equilibrium of a vanderwaals or a Berthelot gas Maxwell's lever-rule graphically determines vapour pressure at any temperature below $T_{cr}$. When electron pairs partially condense into the ground state for particles obeying Bose-Einstein statistics their vapour pressure depends on number density through:

$$p = \frac{h^2}{4*\pi*m} * \zeta(5/2) * \left(\frac{n}{\zeta(3/2)}\right)^{5/3} \qquad (4)$$

where the Riemann $\zeta$ function has a numerical values $\zeta(3/2) \approx 2.612$ and $\zeta(5/2) \approx 1.341$. See Huang II, p. 147.

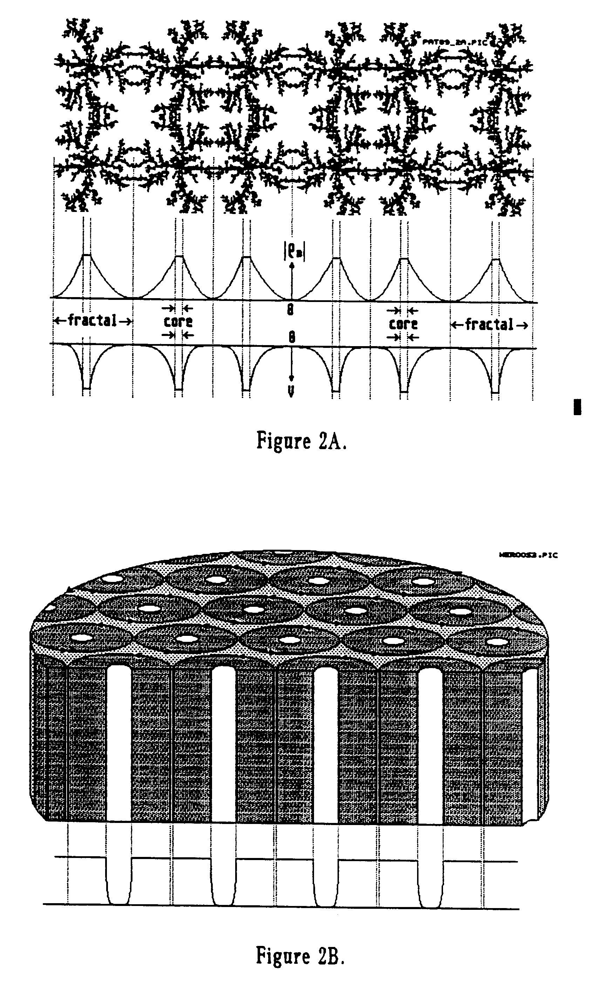

Figure 1 shows line DE as transition curve for Bose-Einstein condensation of electron pairs calculated from Equation (4). At point I on line DE condensed electron pairs with temperature 273 K, or 0 ° C, have vapour pressure above 1 bar. Pressure equilibrium comes from binding energy of nonuniform boson density . Figure 2A shows a network of boson fractals with highest charge density at their center, and Figure 2B shows an array of boson vortex filaments with highest charge density on cylindrical surfaces. In our non-relativistic treatment one can add any number of electron pairs to the condenstate without increasing its pressure. As progressive condensation shifts particle density to higher concentrations along isothermal lines such as IK In Figure 1, interparticle distances diminish to a point where nuclei can tunnel through their

6

repulsive coulomb barrier and fuse to states of lower nuclear energy.

| Temperature, K | 253 | 288 | 647 |
|---|---|---|---|
| Pressure of water vapour, kPa | 0.10 | 1.71 | 22100 |
| Pressure of electron pairs, kPa | 128 | 178 | 1344 |

**Table 4. Vapour pressure of saturated water vapour, and pressure of electron pairs condensed into Bose-Einstein ground state, at relevant temperatures.**

By Paschen's empirical law the break-down voltage of gases around STP depends on the product of gas pressure and electrode spacing. The observed minimum breakdown voltage in Paschen's curve is connected with formation of microscopic electron avalanches called after Townsend.

In low-pressure gas between closely spaced electrodes free electrons cannot form an avalanche from impacts with neutral atoms unless the applied electric field accelerates them beyond the ionization energy. In this regime Thomson's cross section formula expresses the probability of impact ionization in terms of kinetic energy of electrons and ionization potential of atoms. Thomson's ionizing impact mechanism barely deflects the trajectory of the colliding electron, leading to ordered electron motion along applied field lines during breakdown. This ordered motion of free electrons will not thermalize until competitive scattering processes prevail over Thomson ionization.

Higher densities reduce the mean free path of electrons, demanding a stronger applied field to make ionization dominate over collisional excitation of atoms. While lowering the chances of impact ionization or excitation, progressive breakdown increases the chances of Coulomb interaction between electrons and ions. In this regime Rutherford's cross section formula expresses the probability of scattering by Coulomb interaction in terms of the incoming electron's kinetic energy. By deflecting electron trajectories in many directions Rutherford scattering impedes ordered motion progressively as breakdown increases ion concentration in the discharge. The usual outcome is a fully thermalized discharge plasma with all particle species in random motion under equipartition of their kinetic energy.

When kinetic energy of incoming electrons increases much beyond ionization energy, the Rutherford scattering cross section approaches zero more rapidly than the Thomson ionization cross section. With concentrations $n_o$ for neutral atoms, and n for electrons and ions, the cross-over at kinetic energy $U_k = U_i^*$-$(n_o-3n/4)/(n_o-n)$ requires the applied electric field E to reach a threshold value:

$$E_{th} = \frac{ne^2}{32\pi\varepsilon_o^2 V_i} \cdot \frac{n_o - n}{n_o - 3n/4} \qquad (5)$$

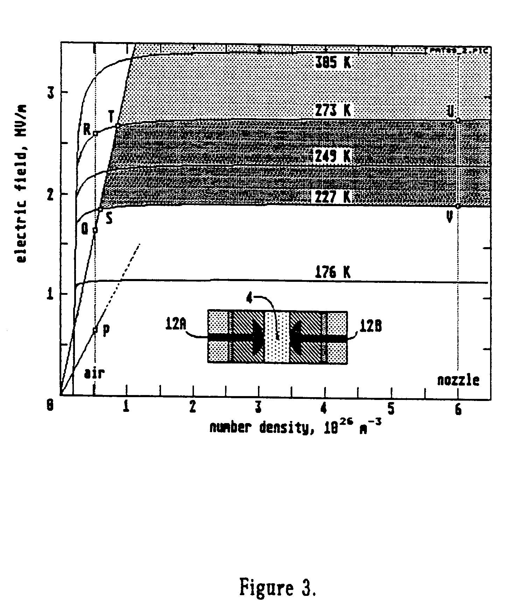

where the elementary charge $e = 1.6*10^{-19}$ coulomb and the vacuum dielectric constant $\varepsilon_o = 8.85*10^{-12}$ farad/meter are fundamental constants as before, and ionization potential $V_i = U_i/e$ is a material constant depending on the atoms of the gas in which breakdown takes place. For a natural or laboratory gas of given density and composition. Equation 5 specifies the applied field strength that will thermalize impact ionization at electron concentration n in a discharge with $n_o$ as concentration of neutral atoms. Curve RTU in Figure 3 shows electric field thresholds calculated from Equation 5 at temperature 273 K for intial neutral particle densities in air and in our apparatus. For a ball lightning forming in air, point R marks an electric field threshold much higher than point Q marking experimental breakdown fields in air between spherical electrodes. . Taking for air the ionization potential $V_i = 14$ volt of its main component nitrogen, and $n = 2.5*10^{25}$ m$^{-3}$ for equal numbers of electrons, ions and neutral particles at STP, the threshold field of Equation 5 comes out as $E_{th} = 23$ kV/cm, but electric breakdown between spherical electrodes already sets in at 17 kV/cm. Figure 3 shows that lower temperatures and higher particle densities improve conditions for ball lightning generation between fixed electrodes. Line QST extrapolates experimental breakdown fields between spherical electrodes in air to higher densities in accordance with Paschen's law. Breakdown at gas conditions in the shaded regions of Figure 3 will drive discharge plasma into the unstable region of Figure 1, where electron pairs collaps into a collective ground state.

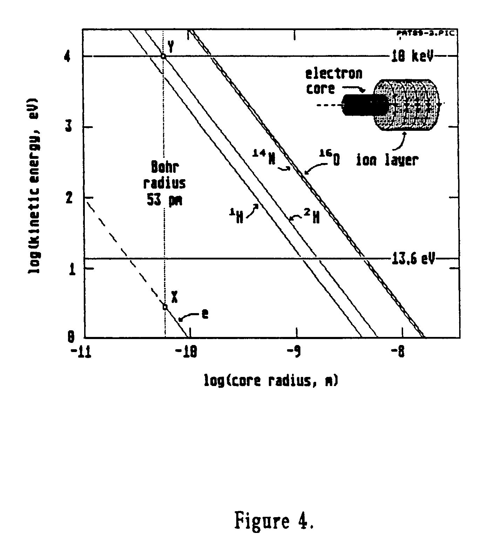

During collaps of a vortex filament, angular momentum of all particles is conserved. Figure 4 shows the kinetic energy that electrons and ions obtain during collapse of a vortex filament. Line e shows the kinetic energy of bosonised electrons in the vortex core, and other oblique lines in Figure 4 show kinetic energy of corotating hydrogen, deuterium, nitrogen and oxygen nuclei. Being more massive than electrons, rotating ions get so much kinetic energy that in a quantized vortex filament with moderate core radius, ion energy passes the threshold Y for fusion reactons between light nuclei. Figure 4 is derived from non-relativistic theory so that rest energy of the electrons mc $^2$ = 511 keV at Z serves as upper limit. Figure 4 shows that light nuclei reach fusion threshold 10 keV at Y when the vortex core radius has collapsed to the Bohr radius, 53 pm. In this boson vortex ions circulate around electrons instead of the other way round as in atoms. Size and shape of the vortex core are similar to collective wave functions for chain-like macromolecules in organic chemistry.

The boson core of the vortex is quantized so that the electrons do not radiate, and this limits radiative energy loss and cooling of the vortex structure. Figure 4 is calculated for core electrons with unit circulation quantum. In relativistic form, rotational velocity $v_{rot}$ of collapsed electrons approaches the speed of light c when core radius r approaches the Compton wavelength $\lambda_c$ according to:

$$v_{rot} = \frac{c}{\sqrt{1 + \left(4\pi r/\lambda_c\right)^2}} \qquad (6)$$

The ion layers in a vortex filament can be collisionless if all the ions have the same charge-to-mass ratio. For a mixture of ions with different charge-to-mass ratios , centripetal coulomb forces cause differences in rotational velocity large enough to produce fusion reactions. The rate of relevant fusion reactions depends strongly on the Gamow penetration factor G for tunneling of two nuclei through their repulsive coulomb barrier. The Gamow penetration factor for proton capture by a nucleus with atomic number Z and one half of the proton's charge-to-mass ratio, is given by:

$$G = \exp\left(\frac{-4\pi r Z}{(\sqrt{2} - 1)a_o}\right) \qquad (7)$$

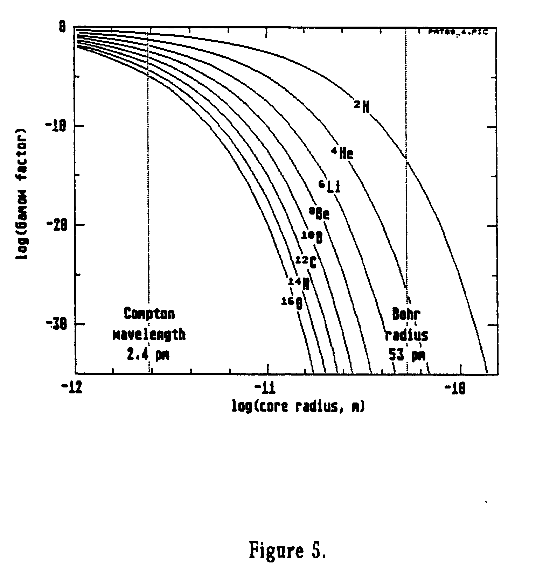

showing once more that fusion reactions begin when vortex core radius and Bohr radius have comparable magnitude. Figure 5 illustrates the behaviour the Gamow factor G of Equation 7 for all nuclei in between deuterium and oxygen on a double logaritmic scale. For core radii smaller than the Compton wavelength $\lambda_c$ = 2.4 pm all curves approach unity. For core radii above the Bohr radius $a_o$ = 53 pm all curves decrease exponentially to zero. At fixed core radius proton capture by deuterons has the largest Gamow factor, being 13 orders of magnitude larger than proton capture by helium-4. Clearly, hydrogen isotopes will burn first in our boson vortex, as they do in stellar evolution.

In superfluid helium, a network of quantized vortex filaments results in macroscopic plasma circulation. Likewise, quantized circulation of charged boson vortices is found to couple charge storage, circulation and dimensions of the discharge plasma in the following way. Let each vortex filament have unit circulation quantum h/2m, and radius one London penetration length $\lambda_L$ = $(m/\mu_o n e^2)^{1/2}$ determined by electron concentration n. Let the discharge take place between electrodes at distance d in a sheared gas flow with circulation C. Then the gas flow can contain C/(h/2m) quantized vortex filaments with volume $d^*\pi\lambda_L^2$ , and electrons trapped in the vortex core have a total charge Q given by:

$$Q = - \frac{2\pi m^2}{\mu_o e h} * C * d \qquad (8)$$

with fundamental constants $m = 9.11*10^{-31}$ kg for electron mass, $\mu_o = 4\pi.*10^{-7}$ henry/meter for vacuum permeability, $e = 1.6*10^{-19}$ coulomb for elementary charge, and $h = 6.63*10^{-34}$ joule*sec. for Planck's con- stant. Equation 8 fixes the amount of charge that can be trapped in a network of boson vortices with unit circulation when a discharge is struck between electrodes at distance d in sheared gas flow with circulation C in the discharge region. For electrode separation $d = 8$ cm in gas flowing with velocity $v = 100$ m/s, a rough estimate for circulation gives $C \sim v*d = 8$ m$^2$/s, leading to $Q = - 0.025$ coulomb for trapped charge according to Equation 8. This is easily within reach of charge transfer up to 20 coulomb for linear lightning.

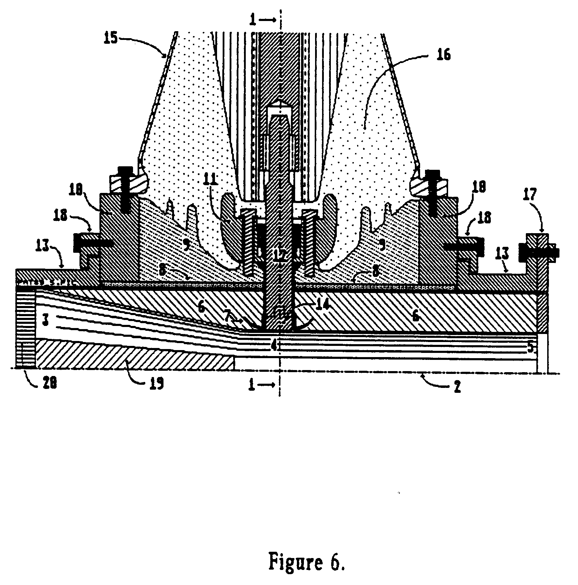

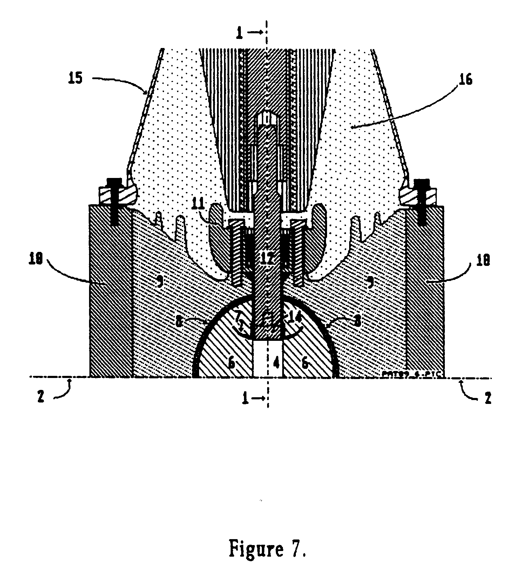

The conditions specified in Equations 1 through 8 are met with the apparatus shown in Figures 6 through 12 . Figure 6 shows a section of the electrode configuration in the direction of gas flow, and Figure 7 shows a similar section perpendicular to the flow direction. A high-voltage discharge takes place in a flowing gas in discharge gap 4 between an electrodes 12 and an identical electrode on the other side of symmetry plane 2. The electrode configuration must support several hundred kilovolts across discharge gap 4. To prevent spark-over outside metal housing 10, electric current enters electrode 12 through a conventional high-voltage bushing 15 with chamber 16 for SF$_6$-gas at pressure 6-8 bar.

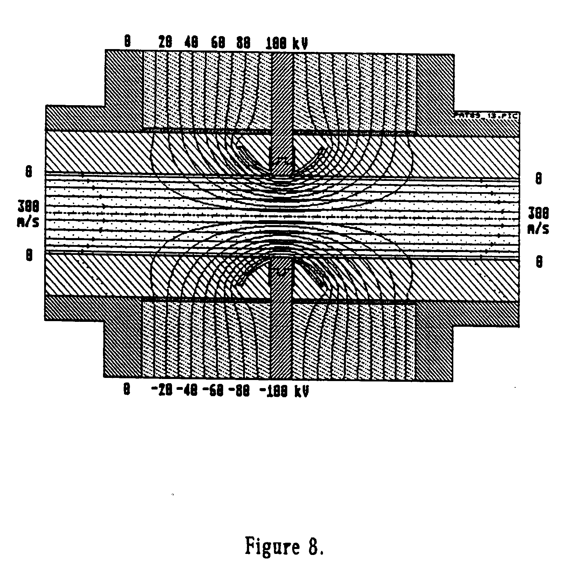

The electrode is tightly connected to metal housing 10 with a copper collar 11 , and it ends in removable electrode tip 14. The electrode is surrounded by a filling piece 9 made from insulating material, for instance polypropylene. This filling piece fits snugly inside metal housing 10 so that no gas can escape from SF$_6$-chamber 16. Gas flow takes place trough nozzle casting 6 made out of Kufalite or other insulating material insensitive to ionizing radiation. Some nozzles are cast with a metal flange 7 serving to make the electric field in discharge gap 4 more uniform. Near electrode 12 nozzle casting 6 is surrounded by a pipe made from strong and insulating material such as the twaron fibre. The duct is also surrounded by aluminium pipes 13 which are screwed to the metal housing 10 by means of rings 18. A plate with a hole 17 keeps nozzle casting 6 fixed inside the electrode housing 10. At nozzle inlet 3, a suitable gas mixture flows into nozzle casting 6 towards discharge gap 4, and issues into free air at exhaust 5. Bushing 15, chamber 16, collar 11, electrode 12, tip 14 and flange 7 have a common symmetry axis 1. For good insulation against high-voltage breakdown outside discharge gap 4, nozzle casting 6 and fibre pipe 8 are wetted with oil to prevent leakage currents and breakdown through the interface between them. Figure 8 shows electric field strength in and around discharge gap 4 prior to breakdown. The electric field strength is calculated from the Laplace equation assuming overall symmetry around axis 1. The field is strongly peaked at the surface of metal parts 7, 12 ,14. Polarization of dielectric parts 6, 8, 9 causes steep electric field "ridges" on the boundaries with grounded metal housing 10, and high-voltage electrode 12. Field strength in electrode gap 4 is fairly uniform, except near electrode tip 14, where breakdown is most likely to begin. For the electrode configuration of Figures 6 , 7 the electric field threshold of Equation 5 is not reached throughout electrode gap 4, as it should.

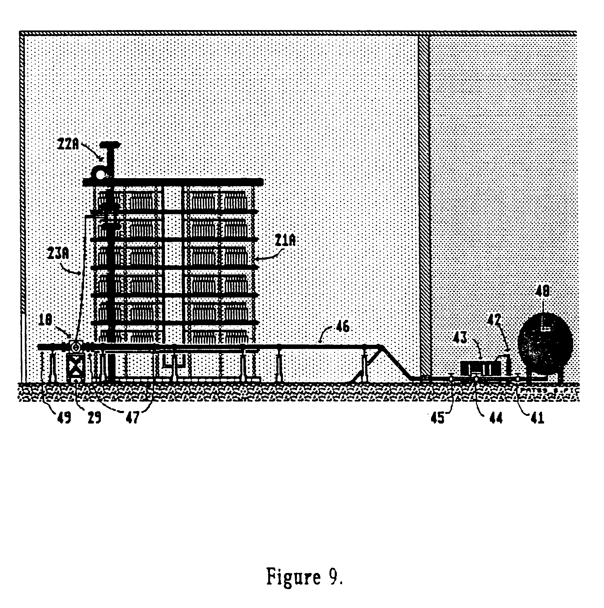

As a second requirement, the electrode configuration must have sufficient mechanical strength to withstand gas pressures up to 20 bar, increased by a powerful electric discharge. The required mechanical strength of the discharge nozzle comes from metal housing 10 made of strong aluminum alloy Fortal, from aluminum pipes 13 bolted to housing 10, and from twaron fibre pipe 8 around nozzle casting 6. During operation, housing 10 is joined to its counterpart on the opposite side of symmetry plane 2 with long bolts not shown in Figures 6 , 7. After an experiment, bolts joining pipes 13 to either housing are loosened, and the electrodes are moved apart for inspection of their surface condition and replacement of tips. Only after both electrodes are taken out of their respective holes in nozzle casting 6, the latter can be taken out of pipes 13 for cleaning or replacement purposes. The flow channel through nozzle casting 6 begins with a circular cross section with diameter 18 cm at inlet 3, narrows gradually to a rectangular section measuring 3x8 cm at discharge gap 4, then widens again to a square section of 8x8 cm at exhaust 5. The flow channel is contoured as a Laval nozzle for supersonic flow at Mach number 2.5, allowing acceleration to supersonic velocities without dissipation or shock waves that heat the gas above the critical point in Figure 1 . Just upstream of discharge gap 4 a wake form 19 may be placed inside nozzle inlet 3 forming behind its blunt trailing edge a wake region with strong internal gas circulation in which the discharge is struck. Smaller recirculation pockets can be made in nozzle casting 6 by fixing electrode 12 at a more upward position than shown in Figure 6. Upstream of wake form 19 a fine honeycomb mesh 20 suppresses the larger eddies in the turbulent inflow at nozzle inlet 3. The gas flow is conditioned with apparatus shown in Figure 9. A gas reservoir 40 contains non-combustible carrier gas, for instance nitrogen, at pressures up to 100 bar. A throttle valve 41 reduces a pressure of the gas tank to 19 bar. At this inlet pressure gas flow through a Mach 2.5 Laval nozzle exhausts into free air with a minimum of shock wave heating. A mixing unit 43 injects a controlled amount of thermonuclear fuel, for instance deuterium, from a gas bottle 42 through injection valve 44 into carrier gas flowing from reservoir 40. A steel pipe 46 leads the gas mixture through adaptors 47 to the nozzle inlet inside metal housing 10. The gas flow issues in free air through an orifice 49 with a square section matching the supersonic exhaust of the Laval nozzle.

| quantity | | lightning | test facility |
|---|---|---|---|
| gas pressure, | bar | 1 | 1 - 8 |
| gas density, | $kg/m^3$ | 1.3 | 1 - 14 |
| temperature, | K | 273 | 230 |
| deuterium content, | ppm | 10 | 100 - 1400 |
| electric field, | kV/cm | 30 | 10 - 30 |
| current, | kA | 10 - 200 | 40 - 140 |
| charge, | C | 2 - 20 | 0.5 - 4 |
| rise time, | µs | 50 - 100 | 20 - 100 |

Table 5. Range of gas conditions and discharge parameters in for lightning and in discharge nozzle.

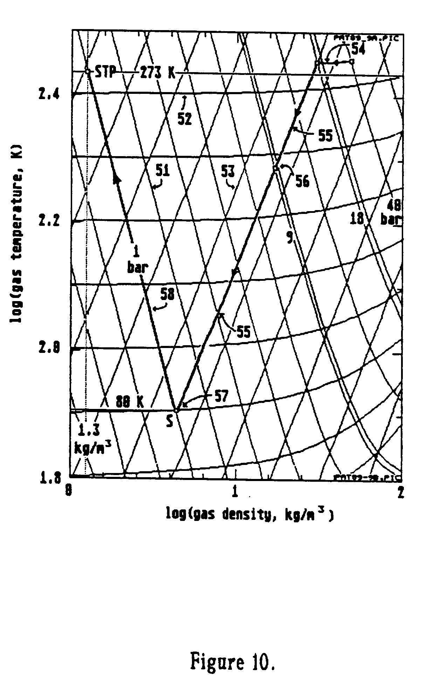

Conditions in the gas flow are known from standard equations of state for gases shown in Figure 10 , where density appears along the horizontal axis, and temperature along the vertical axis. In Figure 10, lines 51 are isobars, lines 52 are isenthalps and the lines 53 are isentropes. The solid line in Figure 10 marks successive conditions of gas on its way from reservoir 40 to STP. Throttle valve 41 is preset to reduce the reservoir pressure to 19 bar at ambient temperature along isenthalpic path 54, with a slight cooling typical of vanderwaals gases below the inversion temperature . Pressure drop in pipe 46 from turbulent friction forces can be neglected in the present context. As the gas flow accelerates in the converging section of the Laval nozzle, pressure, temperature and density drop along isentropic path 55 to throat conditions (9 bar, 190 K) at 56. As the gas accelerates further to supersonic conditions along the same isentrope, exhaust conditions (80 K, 1 bar) are met at 57 , and from there turbulent mixing with air at constant pressure brings the gas to STP along isobaric path 58. atmospheric deuterium concentration in humid air, typically 10 ppm. Table 5 compares the range of gas conditions and discharge parameters for natural lightning with corresponding quantities in our experimental facility.

| component | symbol | magnitude |
|-----------|--------|-----------|
| source capacitance | 31A,B | 2 - 8 μF |
| cable inductance | 33A,B | 124 μH |
| cable resistance | 34A,B | 0.73 Ω |
| balance resistance | 37A,B | 25 Ω |
| balance capacitance | 38A,B | 170 nF |

Table 6. Magnitude of electrical components in ignition circuit for boson vortex plasma.

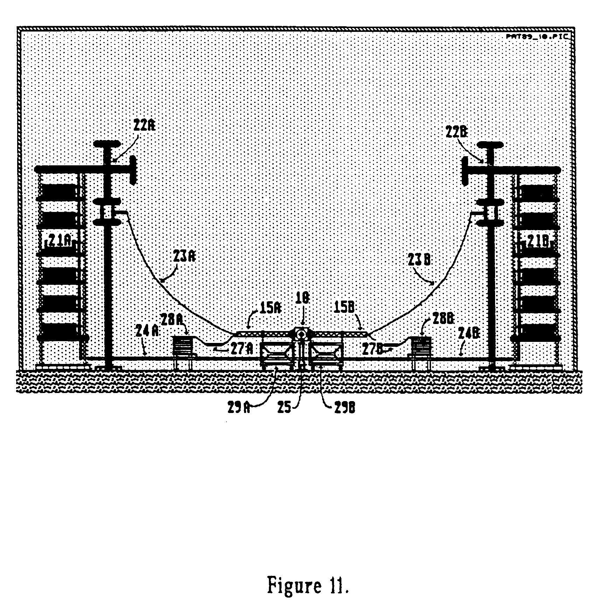

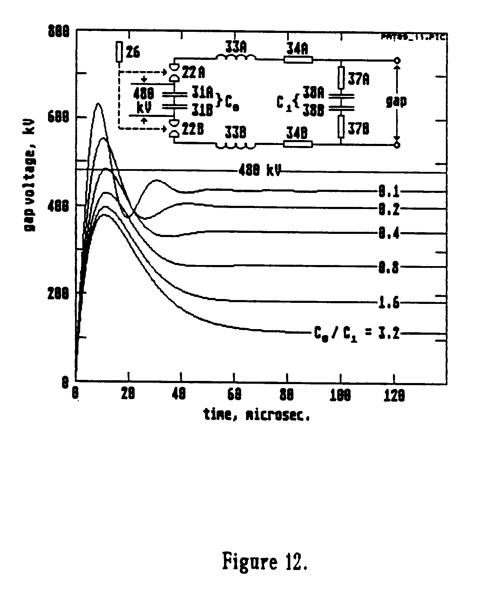

Electric power enters the discharge nozzle from high-voltage capacitor banks 21A,B shown in Figure 11 from the front of the test facility. Cable 23A carries negative charge from bank 21A to bushing 15A on wheeled support 29A, cable 23B carries an equal amount of positive charge from bank 21B to bushing 15B on wheeled support 29B. The 5 meter span of the bushings safeguards against external breakdown up to 1 MV external voltage. Metal housing 10A,B is grounded, and rests on a fixed support 25. Charge returns through metal bars 24A,B grounded at metal housing 10, and connecting capacitor banks 21A,B directly. The two symmetrical halves of the electric circuit are balanced with balance capacitors 28A,B and resistors 27A,B. Spark gaps 22A,B provide insulation when the capacitor bank 21A charged up to 240 KV, and capacitor bank 21B up to -240 kV. The discharge is initated by triggering spark gaps 22A,B simultaneously with an injection timer 26 shown in the electrical circuit of Figure 12 . In the ignition circuit of Figure 12 source capacitance 31A,B represents the capacitor banks 21A,B, circuit inductance 33A,B and resistance 34A,B represents cables 23A,B and bars 24A,B, and parallel resistance 37A,B and capacitance 38A,B represents balance resistors 27A,B and 28A,B. Table 6 specifies the range of circuit parameters during experiments with the electrical circuit shown in Figure 12.

| References | |
|---|---|
| 1. M. Kruskal et al. | US Patent 3 016 342 (1962) |
| 2. R.F. Post | US Patent 3 170 841 (1965) |
| 3. P.T. Farnsworth | US Patent 3 258 402 (1966) |
| 4. P.M. Koloc | US Patent 4 023 065 (1977) |
| 5. P.L. Kapitza | Plasma and the Thermonuclear Reaction (Nobel Prize Lecture, Science, Vol. 205, p. 959-964, 1979) |
| 6. G.C. Dijkhuis | Autralian Patent 533 989 (1979) Canadian Patent 1 185 020 (1985) European Patent 0 019 668 (1985) |
| 7. R.W. Bass | US Patent 4 448 743 (1984) |
| 8. J. Rafelski, and S.E. Jones | Cold Nuclear Fusion Scientific American, Vol. 257, p.84-89, 1987 |
| 9. H.B. Callen | Thermodynamics (John Wiley & Sons, 1966) |
| 10. A.L. Fetter, and J.D. Walecka | Quantum Theory of Many-Particle Systems (McGraw-Hill Book Company, 1971) |
| 11. Kerson Huang | Statistische Mechanik I, II, III Bibliographisches Institut Mannheim, 1964) |
| 12. H.W. Liepmann, and A. Roshko | Elements of Gas Dynamics (John Wiley & Sons, 1957) |
| 13. B.M. Smirnov | Introduction to Plasma Physics (Mir Publishers, Moscow, 1977) |
| 14. B.B. Mandelbrot | The Fractal Geometry of Nature (W.H. Freeman and Company, New York, 1977) |
| 15. R. C. Weast (Editor) | CRC Handbook of Chemistry and Physics (67th Edition. CRC Press, 1986-87) |

## Claims

1. Method for generating a continous fusion process in a superconducting vortex plasma which is generated by an electrical high-voltage discharge over a discharge gap (4),
**characterized in that**
through the discharge gap (4) a cold gas containing nuclear fusion fuel is led at high speed.

2. Method according to claim 1,
**characterized in that,**
the nuclear fusion fuel is deuterium and/or hydrogen.

3. Method according to claim 1,
**characterized in that,**
the initial gas mixture contains sufficient thermonuclear fuel mixed with inert carrier gas to initiate fusion reactions in ion layers circulating at high speed around self-trapped electrons in the core of vortex filaments.

4. Method according to claim 1,
**characterized in that,**
the discharge is immersed in an ambient gas flow maintaining its position and internal circulation in a reaction chamber, continuously removing its reaction products and supplying it with fresh fuel.

5. Method according to claim 1,
**characterized in that,**
the discharge strikes a gas flow with sufficient velocity in order to transfer charge from the high-voltage supply to a network of microscopic vortex filaments forming a spherical plasma vortex.

6. Method according to one of the above claims,
**characterized in that,**
the high-voltage discharge has a voltage of at least 100 kV.

7. Method according to one of the above claims,
**characterized in that,**
the electric field at breakdown exceeds a threshold value in order to form a cold and dense discharge plasma with electron pairs partially condensed into the ground state for particles obeying Bose-Einstein statistics.

8. Method according to one of the above claims
**characterized in that,**
the gas temperature is below room temperature.

9. Method according to one of the above claims ,
**characterized in that,**
the gas has sonic velocity when passing through the discharge gap (4).

10. Device for generating a continuous fusion process in a super-conducting vortex plasma,
**characterized in that,**
it comprises a discharge gap (4), which is defined by two electrodes (12) on opposite sides, and an insulating nozzle casting (6) on two other opposite sides, the electrodes being connected by means of a spark gap (22) to at least one capacitor bank (21), which can be charged into several hundred kilovolts, the discharge gap (4) being connected to a source of pressurized gas containing nuclear fusion fuel (42, 43, 44) by means of nozzle casting (6) having a throat in the region of discharge gap (4).

11. Device according to claim 10,
**characterized in that,**
the nozzle is a Laval nozzle.

12. Device according to claims 10 or 11,
**characterized in that,**
the nozzle casting (6) is reinforced by a surrounding pipe (8) made of twaron fibre.

13. Device according to claim 10,
**characterized in that,**
the electric current enters electrode (12) through a high-voltage bushing (15) with chamber (16) for $SF_6$ - gas at pressure 6 - 8 bar.

14. Device according to claim 10,
**characterized in that,**
the electrode (12) is tightly connected to metal housing (10) with a copper collar (11) and it ends in a removable electrode tip (14).

15. Device according to claim 10,
**characterized in that,**
the electrode (12) is surrounded by a filling piece (9) made from insulating material.

16. Device according to claim 15,
**characterized in that,**
the insulating material is polypropylene.

**Patentansprüche**

1. Verfahren zur Erzeugung eines kontinuierlichen Fusionsprozesses in einem supraleitenden Wirbelplasma, welches durch eine elektrische Hochspannungsentladung über einer Entladungsstrecke (4) erzeugt wird,

**EP 0 422 057 B1**

**dadurch gekennzeichnet, daß**
über die Entladungsstrecke (4) ein kaltes Gas mit hoher Geschwindigkeit geleitet wird, welches nuklearen Fusionsbrennstoff enthält.

2. Verfahren gemäß Anspruch 1,
**dadurch gekennzeichnet, daß**
es sich bei dem nuklearen Fusionsbrennstoff um Deuterium und/oder Wasserstoff handelt.

3. Verfahren gemäß Anspruch 1,
**dadurch gekennzeichnet, daß**
die Initialgasmischung in ausreichendem Maße mit Inertträgergas gemischten thermonuklearen Brennstoff enthält, um in Ionenschichten, die mit hoher Geschwindigkeit um selbstangelagerte Elektronen in dem Kern von Wirbelfäden zirkulieren, Fusionsreaktionen auszulösen.

4. Verfahren gemäß Anspruch 1,
**dadurch gekennzeichnet, daß**
die Entladung in einen umgebenden Gasstrom eingetaucht wird, welcher seine Position und interne Zirkulation in einer Reaktionskammer beibehält, kontinuierlich deren Reaktionsprodukte entfernt und sie mit frischem Brennstoff versorgt.

5. Verfahren gemäß Anspruch 1,
**dadurch gekennzeichnet, daß**
die Entladung einen Gasstrom mit ausreichender Geschwindigkeit trifft, um Ladung von der Hochspannungsquelle an ein Netzwerk von mikroskopischen Wirbelfäden, welche einen kugelförmigen Plasmawirbel bilden, zu übertragen.

6. Verfahren gemäß einem der obigen Ansprüche,
**dadurch gekennzeichnet, daß**
die Hochspannungsentladung eine Spannung von mindestens 100 kV hat.

7. Verfahren gemäß einem der obigen Ansprüche,
**dadurch gekennzeichnet, daß**
das elektrische Feld beim Zusammenbruch einen Schwellenwert übersteigt, um ein kaltes und dichtes Entladungsplasma mit Elektronenpaaren zu bilden, welche teilweise in den Grundzustand von Partikeln, die der Bose-Einstein-Statistik genügen, kondensiert werden.

8. Verfahren gemäß einem der obigen Ansprüche,
**dadurch gekennzeichnet, daß**
die Gastemperatur unter der Raumtemperatur liegt.

9. Verfahren gemäß einem der obigen Ansprüche,
**dadurch gekennzeichnet, daß**
das Gas Schallgeschwindigkeit hat, wenn es die Entladungsstrecke (4) passiert.

10. Vorrichtung zur Erzeugung eines kontinuierlichen Fusionsprozesses in einem supraleitenden Wirbelplasma,
**dadurch gekennzeichnet, daß**
sie eine Entladungsstrecke (4) umfaßt, welche durch zwei Elektroden (12) an gegenüberliegenden Seiten und ein isolierendes Düsengußstück (6) an zwei anderen gegenüberliegenden Seiten definiert wird, wobei die Elektroden mittels einer Funkenstrecke (22) mit mindestens einer Kondensatorbank (21) verbunden sind, die auf mehrere hundert Kilovolt aufgeladen werden kann, und die Entladungsstrecke (4) über Düsengußstück (6), welches eine Öffnung in der Gegend von Entladungsstrecke (4) hat, mit einer Quelle von nuklearen Fusionsbrennstoff (42, 43, 44) enthaltendem Druckgas verbunden ist.

11. Vorrichtung gemäß Anspruch 10,
**dadurch gekennzeichnet, daß**
es sich bei der Düse um eine Laval-Düse handelt.

14

**12.** Vorrichtung gemäß Anspruch 10 oder 11,
**dadurch gekennzeichnet**, **daß**
das Düsengußstück (6) durch ein es umgebendes Rohr (8) aus Twaron-Faser verstärkt wird.

**13.** Vorrichtung gemäß Anspruch 10,
**dadurch gekennzeichnet**, **daß**
der elektrische Strom in Elektrode (12) über eine Hochspannungsbuchse (15) mit Kammer (16) für $SF_6$-Gas mit einem Druck von 6 - 8 bar eintritt.

**14.** Vorrichtung gemäß Anspruch 10,
**dadurch gekennzeichnet**, **daß**
die Elektrode (12) dicht mit Metallgehäuse (10) mit einer Kupfermanschette (11) verbunden ist und in einer entfernbaren Elektrodenspitze (14) endet.

**15.** Vorrichtung gemäß Anspruch 10,
**dadurch gekennzeichnet**, **daß**
die Elektrode (12) von einem Füllstück (9) aus Isoliermaterial umgeben ist.

**16.** Vorrichtung gemäß Anspruch 15,
**dadurch gekennzeichnet**, **daß**
es sich bei dem Isoliermaterial um Polypropylen handelt.

**Revendications**

**1.** Procédé pour la création d'un processus de fusion continue dans un plasma tourbillonnaire supraconducteur qui est produit par une décharge électrique à haute tension dans un intervalle de décharge (4) caractérisé en ce qu'un gaz froid, contenant a combustible de fusion nucléaire, est amené à s'écouler à grande vitesse à travers l'intervalle de décharge (4).

**2.** Procédé suivant la revendication 1 caractérisé en ce que le combustible de fusion nucléaire est le deutérium et/ou l'hydrogène.

**3.** Procédé suivant la revendication 1 caractérisé en ce que le mélange gazeux initial contient un combustible thermonucléaire, mélangé avec un gaz de transport inerte, en quantité suffisante pour amorcer des réactions de fusion dans des couches d'ions circulant à grande vitesse autour des électrons autopiégés dans le coeur des filaments du tourbillon.

**4.** Procédé suivant la revendication 1 caractérisé en ce que la décharge est immergée dans un flux de gaz ambiant maintenant sa position et sa circulation interne dans une chambre de réaction, évacuant continuellement ses produits de réaction et l'alimentant en combustible frais.

**5.** Procédé suivant la revendication 1 caractérisé en ce que la décharge frappe le flux de gaz avec une vitesse suffisante pour transférer la charge à partir de la source à haute tension à un réseau de filaments microscopiques du tourbillon formant un tourbillon de plasma sphérique.

**6.** Procédé suivant l'une quelconque des revendications précédentes caractérisé en ce que la décharge à haute tension a une tension d'au moins 100 kV.

**7.** Procédé suivant l'une quelconque des revendications précédentes caractérisé en ce que le champ électrique au claquage dépasse une valeur de seuil de manière à former un plasma de décharge froid et dense avec des paires d'électrons partiellement condensés dans l'état fondamental pour des particules obéissant aux statistiques de Bose-Einstein.

**8.** Procédé suivant l'une quelconque des revendications précédentes caractérisé en ce que la température du gaz est inférieure à la température ambiante.

**9.** Procédé suivant l'une quelconque des revendications précédentes caractérisé en ce que le gaz a une vitesse sonique lorsqu'il passe à travers l'intervalle de décharge (4).

**10.** Dispositif pour créer un processus de fusion continue dans un plasma tourbillonnaire supraconducteur caractérisé en ce qu'il comprend un intervalle de décharge (4) qui est défini par deux électrodes (12) situées sur des côtés opposés de cet intervalle et une pièce coulée isolante formant buse (6) formée sur deux autres cotés opposés, les électrodes étant connectées, par l'intermédiaire d'un éclateur (22), au moins une batterie de condensateurs (21) qui peuvent être chargés sous une tension de plusieurs centaines de kilovolts, l'intervalle de décharge (4) étant connecté à une source de gaz sous pression contenant un combustible de fusion nucléaire (42,43,44), par l'intermédiaire d'une pièce coulée formant buse (6) ayant un col dans la région de l'intervalle de décharge (4).

**11.** Dispositif suivant la revendication 10 caractérisé en ce que la buse est une buse Laval.

**12.** Dispositif suivant l'une quelconque des revendications 10 ou 11 caractérisé en ce que la pièce coulée formant buse (6) est renforcée par un tube (8) l'entourant, réalisée en fibre twaron.

**13.** Dispositif suivant la revendication 10 caractérisé en ce que le courant électrique est appliqué à l'électrode (12) par l'intermédiaire d'une traversée à haute tension (15) comportant une chambre (16) contenant du $SF_6$ gazeux à une pression de 6-8 bars.

**14.** Dispositif suivant la revendication 10 caractérisé en ce que l'électrode (12) est connectée étroitement à un boîtier métallique (10) avec un collier en cuivre (11) et elle se termine par une partie extrême amovible (14) de l'électrode.

**15.** Dispositif suivant la revendication 10 caractérisé en ce que l'électrode (12) est entourée par une pièce de remplissage réalisée en un matériau isolant.

**16.** Dispositif suivant la revendication 15 caractérisé en ce que le matériau isolant est du polypropylène.

Figure 1.

Figure 2A.

Figure 2B.

Figure 3.

Figure 4.

Figure 5.

Figure 6.

EP 0 422 057 B1

Figure 7.

23

EP 0 422 057 B1

Figure 8.

24

Figure 9.

Figure 10.

Figure 11.

Figure 12.